# EUROPÄISCHE PATENTSCHRIFT

(11) **EP 2 403 681 B1**
(45) Veröffentlichungstag und Bekanntmachung des Hinweises auf die Patenterteilung: **05.12.2012**
(21) Anmeldenummer: 10711319.3
(22) Anmeldetag: 14.01.2010
(51) Int. Cl.: B23Q 1/32, B23Q 1/54, B23Q 3/06, B23Q 17/22

(54) **BEARBEITUNGSEINRICHTUNG ZUR BEARBEITUNG EINES WERKSTÜCKS**
MACHINING DEVICE FOR MACHINING A WORKPIECE
DISPOSITIF D'USINAGE DE PIÈCE

(30) Priorität: 06.03.2009 DE 102009012155
(43) Veröffentlichungstag der Anmeldung: 11.01.2012
(73) Patentinhaber: ThyssenKrupp System Engineering GmbH, 74076 Heilbronn (DE)
(72) Erfinder: CORNELIUS, Peter, 54317 Kasel (DE); EISNER, Matthias, 56850 Enkirchen (DE); HAHN, Thomas, 66620 Nonnweiler-Kastel (DE); KAISER, Stefan, 66687 Wadrill (DE); KASPER, Helmut, 66687 Wadern (DE); KLINK, Artur, 66113 Saarbrücken (DE); KLOS, Michael, 66606 St. Wendel (DE); OLAINECK, Christoph, 54290 Trier (DE); SCHULTZ, Michael, 66571 Eppelborn (DE)
(74) Vertreter: Dennemeyer & Associates S.A.
(86) Internationale Anmeldenummer: PCT/EP2010/000144
(87) Internationale Veröffentlichungsnummer: WO 2010/099844

(56) Entgegenhaltungen:
- US-A- 3 617 141
- US-A- 4 338 723
- US-A- 5 848 859
- US-B1- 6 491 612

## Beschreibung

Die Erfindung betrifft eine Bearbeitungseinrichtung zur Bearbeitung eines Werkstücks (insbesondere eines in einer Trageinrichtung, wie einem Spannrahmen oder dergleichen, für die Dauer einer Bearbeitung fixierten Werkstücks). Mit Vorteil ist die Bearbeitungseinrichtung als zumindest teil-automatisierte Bohreinrichtung ausgebildet, die mit ihrem Bohrwerkzeug (automatisiert) zu einem Flächenpunkt auf der zu bearbeitenden Werkstückfläche orthogonal ausrichtbar ist, um Löcher Bohren und/oder Senken zu können, deren Bohrlochachse mit der Flächennormalen im Bohrlochmittelpunkt auf der Bearbeitungsfläche zusammenfällt (Bohren orthogonaler Löcher). Hierfür weist die Bearbeitungseinrichtung kopfseitig eine über eine Lagereinrichtung freibeweglich gelagerte und mit einer Messeinrichtung gekoppelte Andrückplatte (Druckplatte) auf, wobei eine durch ein Kippen der Druckplatte bedingte Positionsabweichung (Druckplatte ist über 360° Grad um die Drehachse des Bearbeitungswerkzeugs herum in allen Punkten kipp- bzw. schwenkbar) derselben - insbesondere ausgehend von einer Zentralposition, in der die als Flächennormale der Druckplatte verlaufende zentrale Achse einer Durchtrittsöffnung der Druckplatte und die Drehachse des Bearbeitungswerkzeugs zusammenfallen - erfassbar ist.

Eine derartige Vorrichtung ist bereits aus der Patentschrift US 5,848,859 bekannt. In dieser Druckschrift wird ein Bohrwerkzeug beschrieben, welches ebenfalls eine in einem Bohrmaschinengehäuse gelagerte Bohrmaschine aufweist, an deren kopfseitigem Ende ein Andrückfuß ausgebildet ist, welcher lagerseitig eine im Querschnitt gesehen kreissegmentförmige (sphärische) Lagerfläche aufweist, die mit einer hiermit korrespondierenden (sphärischen) Fläche im Bohrmaschinengehäuse zusammenwirkt. Hierbei ist der Andrückfuß über einzelne Haltefedern gegenüber dem Bohrmaschinengehäuse vorgespannt in einer definierten Ausgangsposition gegen die sphärische Lagerfläche im Bohrmaschinengehäuse gehalten. Ein Verkippen des Andrückfußes wird durch eine Mehrzahl von seitlich angeordneten linearen Wegmessaufnehmern detektiert, so dass bei einer Verkippung des Andrückfußes eine Steuereinrichtung für einen die Bohreinrichtung tragenden Roboterarm eine Steuerung des Roboterarms veranlasst, derart, dass eine orthogonale Ausrichtung des Bohrwerkzeuges zu der zu bohrenden Fläche erfolgt. Bei dieser Bohreinrichtung werden während des Bohrvorgangs erzeugte Bohrspäne im vorderen Bereich des Andrückfußes unmittelbar angrenzend an die Bohrung selbst abgesaugt.

Der vorliegenden Erfindung liegt die Aufgabe zu Grunde, eine gattungsgemäße Bearbeitungseinrichtung anzugeben, die die vorstehend beschriebenen Nachteile vermeidet. Insbesondere soll durch die erfindungsgemäße Bearbeitungseinrichtung eine genauere bzw. zuverlässigere Positionierung/Ausrichtung des Beartungswerkzeugs sichergestellt werden.

Erfindungsgemäß wird diese Aufgabe durch die Gesamtheit der Merkmale des Anspruchs 1 gelöst. Vorteilhafte Weiterbildungen der Erfindung sind in den Unteransprüchen beschrieben. Gemäß der vorliegenden Erfindung wird vorgeschlagen, die Lagereinrichtung über die die Druckplatte freibeweglich an der Bearbeitungseinrichtung gelagert ist, als Kugelgelenk bzw. Kugelgelenklager auszubilden. Mit Vorteil ist das Kugelgelenklager gekapselt ausgeführt, derart, das Bohrspäne oder dergleichen sich nicht in den Bereich der Lagerstelle zwischen die zusammenwirkenden Lagerbestandteile bewegen können. Des Weiteren wird durch die Kugelgelenklagerung, die zumindest einen einen Kugeloberflächenbereich aufweisenden Lagerkörper und eine den Lagerkörper an den Kugeloberflächenbereichen formschlüssig umschließende Lageraufnahme aufweist, eine kraftfreie Halterung der Druckplatte gewährleistet, bei der keinerlei Kraftspeicher an der Druckplatte angreifen, um diese in einem unbelasteten Zustand in eine vorbestimmte Position (wie die Zentralposition) auszurichten bzw. in dieser zu halten. Durch die formschlüssig umschließende Lageraufnahme wird ferner gewährleistet, dass der Lagerkörper auch bei Auftreten von Zug- oder Druckkräften an der Druckplatte nicht aus der Lageraufnahme gezogen werden kann und somit keine hieraus resultierenden Messfehler auftreten können. Auch wird durch die Art der Lagerung eine ungewollte Krafteinwirkung auf die an der Druckplatte angreifenden Messaufnehmer wirkungsvoll vermieden. Die Lagereinrichtung kann beispielsweise durch ein ggf. leicht modifiziertes Gelenklager des Typs SC.., SSCP.., oder dergleichen der Firma Hirschmann (Katalog GD 1905 "Hochleistungs-Gelenkköpfe und Gelenklager", Seite 19, 20) gebildet sein. Die Ausrichtung der kugelgelagerten Druckplatte, welche sich bei Andrücken an das zu bearbeitende Werkstück entsprechend der Werkstückoberfläche relativ zu dieser ausrichtet, wird insbesondere über zumindest drei, vorzugsweise vier Abstandsmessungen erfasst. Dabei kann die Abstandsmessung kontaktbasiert mittels mechanischer Messaufnehmer oder kontaktlos, insbesondere auf optischem Wege erfolgen. Im Falle einer kontaktlosen Positionsermittlung der Druckplatte können drei bzw. vier Sensoriken insbesondere umfänglich gleichmäßig um eine Werkzeug-Durchführöffnung der Druckplatte verteilt angeordnet werden. Alternativ kann die Positionserfassung aber auch durch nur eine Sensorik erfolgen, über welche dann nacheinander die verschiedenen drei bzw. Messpunkte ausgemessen werden. Hierfür ist die Sensorik insbesondere freibeweglich gelagert. Die Messeinrichtung bzw. Messsensorik ist derart in die Bearbeitungseinrichtung integriert, dass im Falle einer orthogonalen Ausrichtung der im Bearbeitungspunkt an der Werstückoberfläche anliegenden Druckplatte im Falle von drei Abstandsmessungen alle Messwerte gleich sind, und im Falle von vier Abstandsmessungen zumindest die Messwerte von jeweils zei gegenüberliegenden Messsensoren gleich sind.

In einer besonders bevorzugten Ausführungsform der Erfindung, ist die Bearbeitungseinheit der Bearbeitungseinrichtung als Bohreinheit mit einer Bohrspindel zur Aufnahme eines Bohrwerkzeuges ausgebildet. Um eine positionsgenaue Anlage der Druckplatte jederzeit auch während des Betriebs (bzw. der spanenden Bearbeitung) zu gewährleisten weist die Bearbeitungseinrichtung in dem der Druckplatte abgekehrten Bereich - in Vorschubrichtung des Bearbeitungswerkzeugs gesehen vor dem Kugelgelenk - eine seitlich angeordnete Absaugvorrichtung zum Absaugen von Spänen und/oder Schmier- bzw. Kühlflüssigkeit auf. Durch eine derartige Anordnung der Absaugvorrichtung bleibt die Lagerung der Druckplatte von zusätzlichen Krafteinflüssen unbeeinflusst.

In anderen Ausführungen der Erfindung ist es allerdings auch denkbar andere Bearbeitungseinheiten mit rotierenden Bearbeitungswerkzeugen zur spanenden Bearbeitung vorzusehen. So sind beispielsweise Fräs- oder Senkwerkzeuge oder dergleichen mit von der Erfindung umfasst. In einer anderen bevorzugten Weiterbildung der Erfindung ist vorgesehen, die Bearbeitungseinheit mit einer Vorschubeinrichtung auszustatten derart, dass das rotierende Bearbeitungswerkzeug entlang seiner Drehachse axial verfahrbar ist. Mit Vorteil ist die Druckplatte nebst der Lagereinrichtung Bestandteil einer Andrückeinheit, wobei die Andrückeinheit über eine weitere Antriebseinrichtung (im Folgenden auch als Andrück-Antriebseinrichtung bezeichnet) ebenfalls entlang der Drehachse des Bearbeitungswerkzeuges verfahrbar ist. Dabei ist die Andrück-Antriebseinrichtung derart ausgebildet, dass die Verfahrbarkeit der Andrückeinheit unabhängig von der Verfahrbarkeit Vorschubeinrichtung ist. Die Andrückeinheit weist mit Vorteil einen die Bearbeitungseinheit insbesondere koaxial umschließenden Tragrahmen auf, welcher über die Andrück-Antriebseinrichtung relativ zu einer ortsfesten Grundplatte in axialer Richtung entlang der Drehachse verfahrbar ist. Die Druckplatte ist über die am Tragrahmen fixierte Lagereinrichtung mit dem Tragrahmen verbunden und an einem in einer Lageraufnahme (bzw. einer hohlkugelförmigen Lagerbuchse) frei drehbeweglich in alle Richtungen gelagerten Lagerkörper (bzw. einer Kugelkalotte des Kugelgelenks) stirnseitig an der der Grundplatte abgekehrten Seite befestigt. Dabei weisen sowohl der Lagerkörper und die Lageraufnahme in Richtung der Drehachse des Bearbeitungswerkzeugs ein Durchgangsloch bzw. eine Durchgangsöffnung zur Durchführung der Bearbeitungseinheit, des Bearbeitungswerkzeugs oder eines Teils hiervon als auch die Druckplatte eine mit dem Durchgangsloch des Lagerkörpers korrespondierende Durchtrittsöffnung auf.

Durch die erfindungsgemäße Bearbeitungseinrichtung, insbesondere die Andrückeinheit mit kugelgelagerter Druckplatte, werden diverse Probleme herkömmlicher Bearbeitungseinrichtungen gelöst. Durch die als Kugelgelenk ausgebildete Lagereinrichtung, richtet sich die Druckplatte der Andrückeinheit beim Andrücken derselben gegen eine dreidimensionale, gekrümmte Fläche eines Werkstückes automatisch tangential zu dieser aus. Durch das Vermessen der Verkippung der Druckplatte (Pendelplatte) kann die robotergestützte Positionierung der Andrückeinheit und der Bohreinheit korrigiert werden, sodass die Drehachse des Bearbeitungswerkzeuges letztendlich unter einem gewünschten Winkel (bevorzugt orthogonal) zur Bauteiloberfläche ausgerichtet ist. Unabhängig vom Winkel unter dem beispielsweise eine über das Bearbeitungswerkzeug zu erstellende Bohrung in das Werkstück eingebracht werden soll (zumindest in gewissen Grenzen), liegt die Pendelplatte tangential im Bearbeitungspunkt am Bauteil/Werkstück an, wobei ein im Bereich einer Durchtrittsöffnung der Druckplatte angeordnetes Anpresselement die Bearbeitungsstelle (Bohrung) entsprechend abdichtet. Durch den eigenständigen Antrieb der Andrückeinheit, können Toleranzen bei der Roboterpositionierung, über die die Bearbeitungseinrichtung gegenüber dem zu bearbeitenden Werkstück positioniert wird, ausgeglichen werden (Toleranzen der Bauteillagerung und der Bauteilgeometrie). Anhand einer optionalen Kraftmessung (hierfür weist die Andrückeinheit mit Vorteil entsprechende mit der (Roboter-)Steuereinrichtung gekoppelte Kraftmessmittel auf bzw. ist sie mit entsprechenden Kraftmessmitteln gekoppelt), kann das zu bohrende Bauteil mit einer definierten Anpresskraft gegen eine Auflage gepresst und somit lokal fixiert werden. Ober eine zusätzliche optionale Sensorik (z.B. Lichtschranke) kann die Werkzeugspitze detektiert werden, sodass über den Kantenabstand (parallel zur Drehachse des Bearbeitungswerkzeugs) zwischen Lichtschranke und Anpresselement bzw. zwischen Lichtschranke und Stirnfläche der Druckplatte, Bohrungen und/oder Senkungen mit exakt definierter Tiefe eingebracht werden können. Um einen Werkzeugwechsel auf einfache Weise zu ermöglichen, kann ein Teil der Andrückeinheit verfahrbar oder verschwenkbar ausgebildet werden.

Die erfindungsgemäße Bearbeitungseinrichtung zur Bearbeitung eines Werkstücks arbeitet gemäß folgender Verfahrensweise. In einem ersten Verfahrensschritt wird die Bearbeitungseinrichtung über den Roboterarm eines Industrieroboters in eine durch hinterlegte Bearbeitungsdaten vorbestimmte Bearbeitungs-Sollposition positioniert. Dabei ist die Bearbeitungs-Sollposition - ausgehend von einer vorbestimmten bekannten Ausgangsposition des Industrieroboters und damit ausgehend von einer bekannten Ausgangsposition der Bearbeitungseinrichtung - durch entsprechende Datensätze zur dreidimensionalen Positionierung der Bearbeitungseinrichtung relativ zu einem zu bearbeitenden und in einer Werstückhalteeinrichtung definiert positionierten Werkstück bestimmt. Ist die Bearbeitungseinrichtung durch den Roboter in eine vorbestimmte x/y-Position in einem vorbestimmten Abstand (z-Position) zum Werkstück bzw. der zu bearbeitenden Werkstückposition positioniert worden, wird die Andrückeinheit über ihre separate Antriebseinrichtung in Vorschubrichtung verfahren, bis die Druckplatte der Andrückeinheit mit einer vorbestimmten Kraft am zu bearbeitenden Werkstück anliegt. Dabei richtet sich die Druckplatte aufgrund ihrer Kugelgelenklagerung am Werkstück aus und es wird geprüft, ob die vorliegende Ausrichtung der Druckplatte der gewünschten, vorgegebenen Ausrichtung (insbesondere orthogonal zur Werkstücköberfläche im Bereich der Bearbeitungsstelle) entspricht. Für den Fall, dass die Ausrichtung der Druckplatte innerhalb eines vorgebbaren Toleranzbereichs liegt, wird mit der Bearbeitung des Werkstücks begonnen (z.B. Bohrmaschine aktiviert und Vorschubeinrichtung gestartet). Für den Fall, dass die Ausrichtung der Druckplatte außerhalb des vorgebbaren bzw. vorgegebenen Toleranzbereichs liegt, wir die Andrückeinheit um eine vorbestimmte Strecke entgegen der Vorschubrichtung verfahren und in einer Position, in der sie nicht mehr in Kontakt mit dem Werkstück steht, in Abhängigkeit von den ermittelten Positionsdaten (Abweichung Soll- zu Istposition) korrigierend erneut ausgerichtet. Anschließend wird die Andrückeinheit wieder an das Werkstück herangefahren bis der definierte Anlagedruck erreicht ist und die Position der Druckplatte erneut erfasst und überprüft. Dies wiederholt sich so oft, bis die Ist-Position der Druckplatte innerhalb des vorgegebenen Toleranzbereiches erreicht ist.

Weitere Vorteile, Besonderheiten und zweckmäßige Weiterbildungen der Erfindung werden in der nachfolgenden Figurenbeschreibung behandelt.

Es zeigen:
- Fig. 1: eine schematische Darstellung der erfindungsgemäßen Bearbeitungseinrichtung mit einer als Bohr- bzw. Bohr-Senkeinheit ausgebildeten Bearbeitungseinheit,
- Fig. 2: eine Darstellung der Bearbeitungseinrichtung gemäß Fig. 1, wobei die Bearbeitungseinrichtung mit ihrer kugelgelagerten Druckplatte an einer relativ zum Bearbeitungswerkzeug schräg angeordneten Bearbeitungsfläche anliegt, und
- Fig. 3: einen Querschnitt der Lagereinrichtung in einer bevorzugten Ausführungsform derselben.

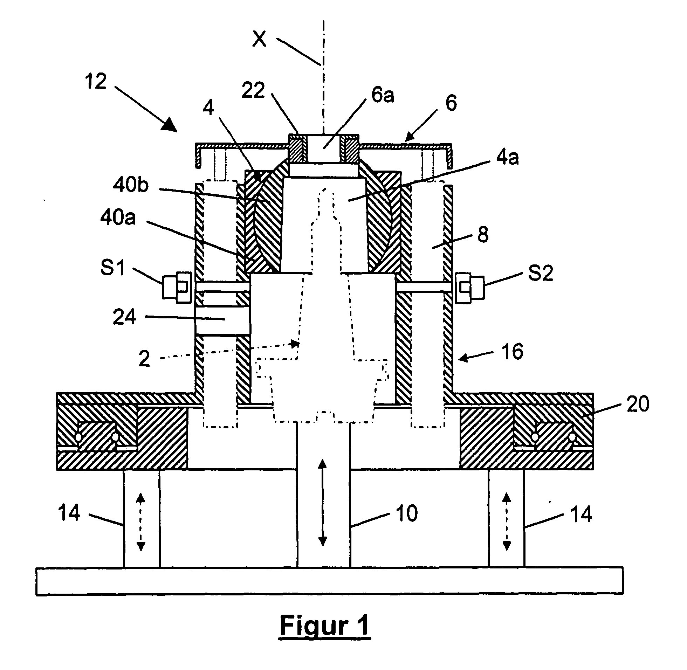

In Fig. 1 ist eine erfindungsgemäße Bearbeitungseinrichtung zur Bearbeitung eines Werkstückes dargestellt, bei der eine Bearbeitungseinheit 2 in Form einer Bohrmaschine eingesetzt ist. Dabei ist die Bohrmaschine 2 über eine Vorschubeinrichtung 10 entlang der Drehachse X (bzw. Vorschubachse) des Bearbeitungswerkzeuges 2a axial verschiebbar angeordnet/gelagert. Hierbei kann die Bearbeitungseinheit 2 über die Vorschubeinrichtung 10 gegenüber einer ortsfest angeordneten Grundplatte 18 (Grundplatte ist ortsfester Bestandteil der Bearbeitungseinrichtung 2) linear vor und zurück bewegt werden. Dabei kann die ortsfeste Grundplatte 18 als separate (senkrecht zur Vorschubachse positionierte) Platte, die an einer derartigen Befestigungsebene eines Roboterarmes befestigbar ist, ausgeführt sein. Koaxial zur Bearbeitungseinheit 2 ist eine Andrückeinheit 12 angeordnet, die auf ihrer einem zu bearbeitenden Werkstück zugekehrten Seite, eine über eine Lagereinrichtung 4 (Kugelgelenk) gelagerte Druckplatte 6 trägt, und die auf ihrer dem zu bearbeitenden Werkstück abgekehrten Seite mit einer weiteren Antriebseinrichtung 14 zusammenwirkt, derart, dass die Andrückeinheit 12 über diese gegenüber der Bearbeitungseinheit 2 bzw. relativ zu dieser in Richtung der Drehachse X und unabhängig von der Bearbeitungseinheit 2 bzw. dem Vorschubantrieb 10 axial verfahrbar ist. Dabei sind zwischen der kugelgelagerten Druckplatte 6 und der Andrückeinheit 12 mehrere Messaufnehmer einer Messeinrichtung 8 angeordnet, um eine entsprechende Verkippung (bzw. das Ausmaß und die Richtung der Verkippung) der Druckplatte 6 bei Andruck auf einer zu bearbeitenden Werkstückfläche zu erfassen. Die Messaufnehmer sind dabei nicht mechanisch mit der Druckplatte 6 verbunden, sondern liegen lediglich auf der Rückseite der Druckplatte 6 mit einer vorbestimmten geringen Federkraft gegen diese an. Dabei ist die Federkraft (im Verhältnis zur Masse der Druckplatte) derart bemessen, dass die Messaufnehmer zwar gegen die Druckplatte 6 anliegen, sie diese jedoch nicht zu bewegen vermögen (die Druckplatte 6 kann demnach also nicht durch die federbelasteten Messaufnehmer bewegt oder gar in eine vorbestimmte Position ausgerichtet werden). Um eine möglichst störungsfreie und genaue Ausrichtung und Positionserfassung der Druckplatte 6 zu erreichen, ist diese im Wesentlichen kraftfrei gelagert, dergestalt, dass (außer den federbelasteten Messaufnehmern) keinerlei Kraftspeicher an der Druckplatte 6 angreifen, um diese in einem unbelasteten Zustand in eine vorbestimmte Position - wie die Zentralposition - auszurichten bzw. in dieser zu halten. Zur Lagerung der Druckplatte 6 weist die Andrückeinheit 12 einen im Wesentlichen hohlzylindrischen Tragrahmen 16 auf, der auf seiner dem Werkstück abgekehrten Seite (bzw. der der Grundplatte 18 zugekehrten Seite) einen hutkragenartigen Fortsatz aufweist, sodass im Querschnitt gesehen, eine Doppel-L-Form - bei der die langen Schenkel des L's einander parallel gegenüberliegen und bei der die kurzen Schenkel des L's in entgegengesetzte Richtungen nach außen weisen - gebildet ist. Die Messaufnehmer 8 sind vom Tragrahmen 16 aufgenommen bzw. zumindest bereichsweise in diesen integriert. Hierdurch wird zum einen ein sehr kompakte Bauweise erreicht und werden zum anderen die Messaufnehmer 8 vor mechanischen oder anderen Einflüssen geschützt. Als weitere Schutzmaßnahme für die Messaufnehmer 8 ist eine (nicht dargestellte) Verdrehsicherung der Druckplatte 6 vorgesehen. Diese Verdrehsicherung besteht im Wesentlichen aus einer Kugel, die in einer Nut einer Seitenfläche der Druckplatte 6 läuft und die an einem Stift kleinen Durchmessers befestigt und über diesen am Tragrahmen 16 oder einem anderen relativ zur Druckplatte 6 ortsfesten Bauteil abgestützt ist.

Ferner sind an dem hohlzylindrischen Bereich des Tragrahmens 16 der Andrückeinheit 12 gegenüberliegend zwei korrespondierende Lichtschrankenelemente S1, S2 angeordnet, mittels denen die Position des Bearbeitungswerkzeuges 2a detektiert werden soll. Diese Positionsbestimmung erfolgt beispielsweise durch eine Detektierung der Spitze des Bearbeitungswerkzeuges 2a und dient insbesondere der Bestimmung einer durchzuführenden Bohr- bzw. Senktiefe im zu bearbeitenden Werkstück. Die Positionsbestimmung wird zumindest nach jedem Werkzeugwechsel zu Beginn der Inbetriebnahme einmal durchgeführt. Hierfür wird die Bearbeitungseinheit 2 mit dem von ihr getragenen Bearbeitungswerkzeug 2a ausgehend von einer in Fig. 1 dargestellten Ruheposition zurückverfahren bis die Spitze des Bearbeitungswerkzeugs 2a (z.B. Querschneide eines Spiralbohrers), den Bereich der Lichtschrankenelemente S1, S2 verlässt (Lichtschranke nicht mehr unterbrochen) und anschließend langsam soweit nach vorne gefahren wird, bis durch die Spitze des Bearbeitungswerkzeuges 2a gerade die Lichtschranke der Lichtschrankenelemente S1, S2 wieder unterbrochen wird. Auf Grund der definierten Lage (bekannter Abstand der Lichtschranke zur Stirnfläche der Druckplatte 6 oder zur Stirnfläche des Anpresselements 22 - im Folgenden auch als Leerweg bezeichnet) der Lichtschrankenelemente S1, S2 zur Stirnfläche der kugelgelagerten Druckplatte 6, kann auf einfache Weise die entsprechende Bohr- bzw. Senktiefe bestimmt werden (Bohr- bzw. Bearbeitungstiefe = Gesamtvorschubweg - Leerweg; bzw. für die gewünschte Bearbeitungstiefe erforderlicher Vorschubweg = Leerweg + gewünschte Bearbeitungstiefe).

Damit die Positionsbestimmung bzw. die relative Lage des Bearbeitungswerkzeuges 2a (definiert durch dessen Drehachse X) zur Flächennormalen N im zum bearbeitenden Punkt der Werkstückfläche genau bestimmt werden kann, ist die Druckplatte 6 derart ausgebildet, dass eine definierte Anlage der Druckplatte 6 möglichst nahe an der zu bearbeitenden Oberflächenposition erfolgt. Hierfür ist die Durchtrittsöffnung 6a der Druckplatte 6 in Anpassung an das durch diese Öffnung 6a durchzuführende Bearbeitungswerkzeug 2a dimensioniert (z.B. Durchtrittsöffnung der Druckplatte 6 bzw. des Anpresselements 22 nur geringfügig größer bemessen als der Durchmesser des Bearbeitungswerkzeugs). Mit Vorteil weist die Druckplatte 6 auf ihrer dem zu bearbeitenden Werkstück zugekehrten Seite im Bereich der Durchtrittsöffnung 6a ein Anpresselement 22 auf. Dieses Anpresselement 22 ist bevorzugt wechselbar an der Druckplatte 6 befestigt und besteht beispielsweise aus Materialien wie Teflon, Metall, Kunststoff oder einem Keramikwerkstoff. Die Auswahl des Werkstoffes für das Anpresselement 22 erfolgt in Abhängigkeit von dem Material des zu Bearbeitenden Werkstückes und/oder in Abhängigkeit von dessen Oberflächengüte. Das Anpresselement 22 kann auf seiner dem Werkstück zugekehrten Oberfläche entsprechend strukturiert sein, sodass ein Kontakt mit dem zu bearbeitenden Werkstück nur im Bereich vorbestimmter Erhebungen erfolgt. Weiterhin kann das Anpresselement 22 auch aus einzelnen Segmentteilen, insbesondere aus Segmentteilen eines Kreisringes bestehen.

Um einen möglichst komfortablen Wechsel des Bearbeitungswerkzeugs 2a (z. B. Austausch eines Bohrers gegen einen Senkbohrer oder einen Bohrer anderen Durchmessers) gewährleisten zu können, ist die Andrückeinheit 12 entsprechend ausgebildet. Hierfür kann beispielsweise der Tragrahmen 16 gegenüber seiner Antriebseinrichtung 14 oder mit seiner Antriebseinrichtung 14 quer zur Drehachse X des Bearbeitungswerkzeugs 2a über eine Schienenführung 20 verfahren werden. Alternativ hierzu ist auch denkbar, dass der Tragrahmen 16 über ein nicht dargestelltes Scharnier bzw. eine entsprechende Gelenkverbindung quer zur Drehachse X des Bearbeitungswerkzeugs 2a verschwenkbar gelagert ist.

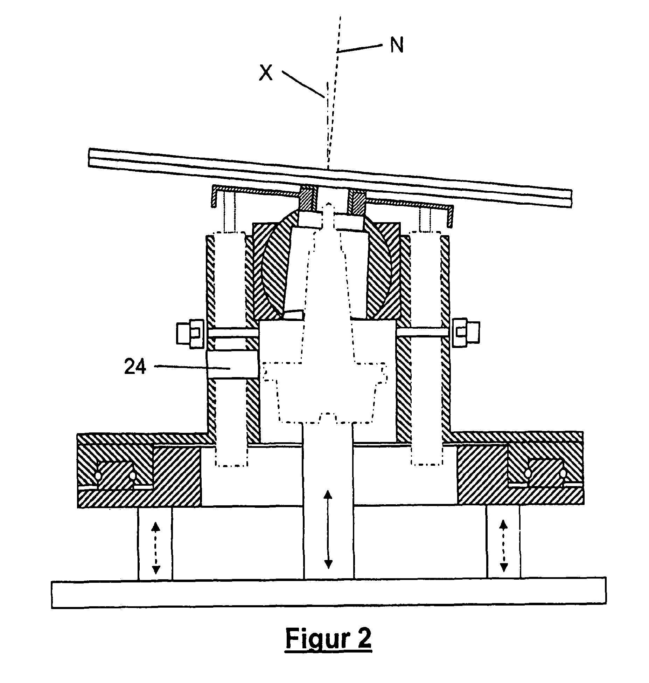

In Fig. 2 ist die erfindungsgemäße Bearbeitungseinrichtung in einer von Fig. 1 verschiedenen Arbeitsposition der Bearbeitungseinheit 2 dargestellt. Hierbei ist die Bearbeitungseinheit 2 in Form einer Bohrmaschine mit ihrem entsprechenden Bohrer als Bearbeitungswerkzeug 2a bis zur Fläche des zu bearbeitenden Werkstückes vorgefahren. Da die zu bearbeitende Werkstückfläche im dargestellten Ausführungsbeispiel relativ zur Bearbeitungseinheit 2 schräg verlaufend positioniert ist, ist die Druckplatte 6 entsprechend verschwenkt. Über die Messaufnehmer (lineare Wegmessaufnehmer) der Messeinrichtung 8 wird das Ausmaß und die Richtung (welche Messaufnehmer sind relativ zu einer Zentralposition um welchen Betrag gelängt und welche verkürzt?) der Verschwenkung der Druckplatte 6, ausgehend von einer Zentralposition, in der die als Flächennormale N der Druckplatte 6 verlaufende zentrale Achse der Durchtrittsöffnung 6a und die Rotationsachse X des Bearbeitungswerkzeugs 2a zusammenfallen, erfasst und die entsprechenden Messwerte an eine entsprechende Auswerte- und Steuereinrichtung eines die Bearbeitungseinrichtung 2 tragenden Industrieroboters (nicht dargestellt) weitergeleitet. Über die Auswerteeinheit kann nunmehr ermittelt werden, in welchem Winkel das Bohrwerkzeug 2a zur Bearbeitungsfläche ausgerichtet ist. Für den Fall, dass eine von diesem Winkel abweichende Bohrung (beispielsweise eine orthogonale Bohrung) durchgeführt werden soll, kann der Industrieroboter nunmehr die Bearbeitungseinrichtung 2 und damit das Bearbeitungswerkzeug 2a bzw. die Bearbeitungseinheit 2 entsprechend ausrichten. Des Weiteren ist die Andrückeinheit 12 bzw. deren Tragrahmen 16 mit einem insbesondere quer zur Vorschubachse angeordneten Absaugkanal 24 ausgestattet, so dass bei der Bearbeitung des Werkstückes abgetragene Werkstückbestandteile (wie Bohrspäne o.d.) und/oder überschüssige Kühl- bzw. Schmiermittel vom dem Andrückbereich der Druckplatte 6 ferngehalten werden. In einer anderen Ausgestaltung der Erfindung, können für die Absaugung von Materialbestandteilen einerseits und zur Absaugung von überschüssigem Kühl- bzw. Schmiermittel auch verschiedene Absaugkanäle vorgesehen sein.

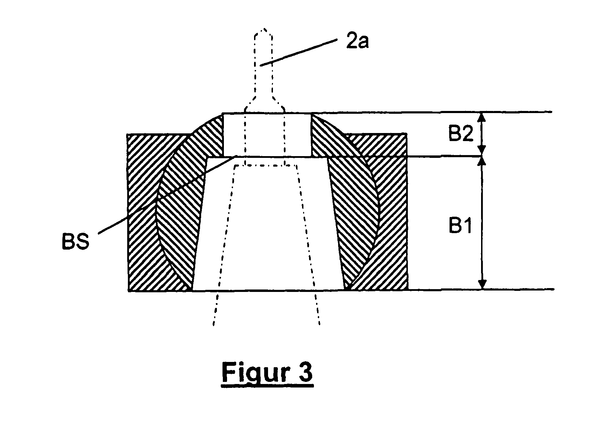

Eine bevorzugte Ausgestaltung des Kugelgelenks 4 ist in Figur 3 dargestellt. Danach ist das Durchgangsloch 4a der Kugelkalotte 40b des Kugelgelenks 4 in Form einer Stufenbohrung ausgeführt. Der erste axiale Bohrungsteil B1 ist der mit dem größeren Durchmesser, an den sich über eine Bohrstufe BS ein zweiter Bohrungsteil B2 kleineren Durchmessers anschließt. Die nicht dargestellte Druckplatte 6 wird stirnseitig im Bereich des Durchgangslochs 4a auf der Seite des kleineren Durchmessers angeordnet. Im dargestellten Ausführungsbeispiel ist der erste Bohrungsteil B1 kegelstumpfartig ausgeführt. Durch den Bohrungsteil B1 mit größerem Durchmesser wird auf einfache Weise eine Kammer zur zwischenzeitlichen Aufnahme von Spänen gebildet, die laufend über die Absaugeinrichtung abgeführt werden.

### Bezugszeichenliste

- 2: Bearbeitungseinheit (Bohrmaschine)
- 2a: Bearbeitungswerkzeug (Bohrer)
X Drehachse
- 4: Lagereinrichtung (Kugelgelenklager)
4a Durchtrittsöffnung der Lagereinrichtung / Durchgangsloch in Kugelkalotte
40a Lageraufnahme/Lagerbuchse (Kugelgelenk)
40b Lagerkörper/Kugelkalotte (Kugelgelenk)
- 6: Druckplatte (Andrückplatte)
6a Durchtrittsöffnung der Druckplatte
- 8: Messeinrichtung (Wegmesser)
- 10: erste Antriebseinrichtung (Vorschub/Antrieb Bearbeitungseinheit)
- 12: Andrückeinheit
- 14: zweite Antriebseinrichtung (Vorschub/Antrieb Andrückeinheit)
- 16: Tragrahmen
- 18: Grundplatte
- 20: Schienenführung (Tragrahmen)
- 22: Anpresselement (Druckplatte)
- 24: Absaugkanal
- S1, S2: Lichtschrankenelement

## Patentansprüche

1. Bearbeitungseinrichtung zur Bearbeitung eines Werkstückes, wobei in einer Bearbeitungseinheit (2) ein rotierbar gelagertes Bearbeitungswerkzeug (2a) gehalten ist, und das Bearbeitungswerkzeug (2a) mit seiner Drehachse (X) zu der zu bearbeitenden Werkstückoberfläche ausrichtbar ist, so dass die Drehachse (X) mit der geometrischen Normalen (N) im Bearbeitungspunkt der Werkstückoberfläche zusammenfällt,
umfassend
- eine über eine Lagereinrichtung (4) freibeweglich an der Bearbeitungseinrichtung gelagerte Druckplatte (6), wobei sowohl die Lagereinrichtung (4) als auch die Druckplatte (6) jeweils eine Durchtrittsöffnung (4a; 6a) für das Bearbeitungswerkzeug (2a) aufweisen, und
- eine Messeinrichtung (8) zur Erfassung einer Abweichung zwischen der Drehachse (X) und der Flächennormalen (N) im Bearbeitungspunkt durch Ausrichtung der Druckplatte (6) an der Oberfläche des Werkstücks im Bereich des Bearbeitungspunkts,
**dadurch gekennzeichnet, dass**
- die Lagereinrichtung (4) einen zumindest einen Kugeloberflächenbereich aufweisenden Lagerkörper (40b) und eine den Lagerkörper (40b) an den Kugeloberflächenbereichen formschlüssig umschließende Lageraufnahme (40a) aufweist.

2. Bearbeitungseinrichtung nach Anspruch 1, **dadurch gekennzeichnet, dass** die Bearbeitungseineinheit (2) als Bohreinheit mit einer Bohrspindel zur Aufnahme eines Bearbeitungswerkzeugs (2a) ausgeführt ist.

3. Bearbeitungseinrichtung nach Anspruch 1 oder 2, **dadurch gekennzeichnet, dass**
- die Bearbeitungseineinheit (2) eine Vorschubeinrichtung (10) aufweist, über welche sie axial entlang der Drehachse (X) verfahrbar ist.

4. Bearbeitungseinrichtung nach Anspruch 3, **dadurch gekennzeichnet, dass**
- die Druckplatte (6) und die Lagereinrichtung (4) als Bestandteil einer Andrückeinheit (12) ausgebildet sind,
- und die Andrückeinheit (12) über eine Antriebseinrichtung (14) gegenüber der Bearbeitungseineinheit (2) in Richtung der Drehachse (X) und unabhängig von der Bearbeitungseineinheit (2) axial verfahrbar ist.

5. Bearbeitungseinrichtung nach Anspruch 4, **dadurch gekennzeichnet, dass** die Andrückeinheit (12)
-- einen die Lagereinrichtung (4) aufnehmenden Tragrahmen (16) aufweist, der über die Antriebseinrichtung (14) relativ zu einer Grundplatte (18) als auch relativ zu der Bearbeitungseinheit (2) in axialer Richtung entlang der Drehachse (X) verfahrbar ist,
-- wobei die Lageraufnahme (40a) axial gegenüberliegende Durchführöffnungen für das Bearbeitungswerkzeug (2a) aufweist, und der Lagerkörper (40b) in Richtung der Drehachse (X) ein mit den Durchführöffnungen der Lageraufnahme (40a) fluchtendes Durchgangsloch aufweist und auf seiner der Grundplatte (18) abgekehrten Seite des Durchgangslochs die Druckplatte (6) mit einer koaxial zum Durchgangsloch angeordneten Druckplattenöffnung (6a) trägt.

6. Bearbeitungseinrichtung nach einem der vorstehenden Ansprüche 4 oder 5, **dadurch gekennzeichnet, dass** die Andrückeinheit (12) oder Teile derselben aus einer Arbeitsposition, in der diese das Bearbeitungswerkzeug (2) im Wesentlichen koaxial umschließt in eine Werkzeugwechselposition überführbar ist, in der das Bearbeitungswerkzeug (2) freigegeben ist.

7. Bearbeitungseinrichtung nach Anspruch 6, **dadurch gekennzeichnet, dass** der Tragrahmen (16) über eine Schienenführung (20) quer zur Drehachse (X) des Bearbeitungswerkzeugs (2) verfahrbar oder über eine Gelenkverbindung quer zur Drehachse (X) des Bearbeitungswerkzeugs (2) verschwenkbar gelagert ist.

8. Bearbeitungseinrichtung nach einem der vorstehenden Ansprüche, **dadurch gekennzeichnet, dass** die Druckplatte (6) auf ihrer der Lagereinrichtung (4) abgekehrten Seite im Bereich der Durchtrittsöffnung (4a) ein Anpresselement (22) aufweist.

9. Bearbeitungseinrichtung nach Anspruch 8, **dadurch gekennzeichnet, dass** das Anpresselement (22) auf seiner einem zu bearbeitenden Werkstück zugekehrten Seite eine strukturierte Oberfläche aufweist, derart, dass das Anpresselement (22) nur im Bereich vorbestimmter Erhebungen in Kontakt mit dem zu bearbeitenden Werkstück gelangt.

10. Bearbeitungseinrichtung nach einem der vorstehenden Ansprüche 8 und 9, **dadurch gekennzeichnet, dass** das Anpresselement (22) aus einzelnen Segmentteilen besteht.

11. Bearbeitungseinrichtung nach einem der vorstehenden Ansprüche, **dadurch gekennzeichnet, dass** die Messeinrichtung (8) eine Mehrzahl von Wegmesssensoren umfasst, welche die aus dem Andrücken der Druckplatte (6) resultierende Bewegung einzelner Punkte der Druckplatte (6) aufnehmen.

12. Bearbeitungseinrichtung nach einem der vorstehenden Ansprüche, **dadurch gekennzeichnet, dass** die Messeinrichtung (8) zwischen dem Tragrahmen (16) und der Druckplatte (6) angeordnet ist.

13. Bearbeitungseinrichtung nach einem der vorstehenden Ansprüche 5-12, **dadurch gekennzeichnet, dass** der Tragrahmen (16) die Messeinrichtung (8) aufnimmt.

14. Industrieroboter mit einem im Raum bewegbaren Tragarm, der eine Bearbeitungseinrichtung (2) gemäß einem der vorstehenden Ansprüche trägt.

## Claims

1. Processing system for the processing of a workpiece, whereby a processing tool (2a) positioned in a rotatable fashion is contained in a processing unit (2), and the processing tool (2a) has a rotational axis (X) that can be orientated with respect to the surface of the workpiece, such that the rotational axis (X) coincides with the geometric normal (N) at the point of processing of the surface of the workpiece,
comprising
- a pressure plate (6) positioned in a freely movable fashion on the processing system via a pivot system (4), whereby both the pivot system (4) and the pressure plate (6) have a passage (4a; 6a) for the processing tool (2a); and
- a measuring system (8) to detect a deviation between the rotational axis (X) and the surface normal (N) at the point of processing by aligning the pressure plate (6) with the surface of the workpiece in the area of the point of processing,
**characterised in that**
- the pivot system (4) has a bearing body (40b) having at least one bearing surface area and a bearing seat (40a) tightly surrounding the bearing body (40b) at the bearing surface areas.

2. Processing system according to claim 1, **characterised in that** the processing unit (2) is designed as a drilling unit with a drilling spindle to accept a processing tool (2a).

3. Processing system according to claim 1 or 2, **characterised in that**
- the processing unit (2) has a feed device (10), by which it can be moved axially along the rotational axis (X).

4. Processing system according to claim 3, **characterised in that**
- the pressure plate (6) and the pivot system (4) are formed as part of a pressing unit (12),
- and the pressing unit (12) can be moved axially versus the processing unit (2) in the direction of the rotational axis (X) and independently of the processing unit (2) via a drive system (14).

5. Processing system according to claim 4, **characterised in that** the pressing unit (12)
- has a gimbal (16) holding the pivot system (4), which can be moved axially, by means of the drive unit (14), relative to a base plate (18) and to the processing unit (2), along the rotational axis (X),
- whereby the bearing seat (40a) has axially opposite passages for the processing tool (2a), and the bearing body (40b) has a through hole in the direction of the rotational axis (X) aligned with the passages of the bearing seat (40a), and bears the pressure plate (6) with a pressure plate opening (6a) arranged coaxially to the through hole on the side facing away from the base plate (18).

6. Processing system according to one of the foregoing claims 4 or 5, **characterised in that** the pressing unit (12) or parts thereof can be transferred from a working position in which it substantially coaxially surrounds the processing tool (2) into a tool change position, in which the processing tool (2) is released.

7. Processing system according to claim 6, **characterised in that** the gimbal (16) can be moved perpendicular to the rotational axis (X) of the processing tool (2) via a rail guide (20), or is positioned in a pivotable manner, perpendicularly to the rotational axis (X) of the processing tool (2) via a joint.

8. Processing system according to one of the foregoing claims, **characterised in that** the pressure plate (6) has a pressure element (22) on the side facing away from the bearing system (4) in the area of the through hole (4a).

9. Processing system according to claim 8, **characterised in that** the pressure element (22) has a structured surface on the side facing the workpiece to be processed, such that the pressure element (22) only comes in contact with the workpiece to be processed in the area of predetermined protrusions.

10. Processing system according of one of the foregoing claims 8 and 9, **characterised in that** the pressure element (22) consists of individual segments.

11. Processing system according to one of the foregoing claims, **characterised in that** the measuring system (8) comprises several displacement measuring sensors, which record the movements of individual points of the pressure plate (6) arising from the pressing of the pressure plate (6).

12. Processing system according to one of the foregoing claims, **characterised in that** the measuring system (8) is arranged between the gimbal (16) and the pressure plate (6).

13. Processing system according to one of the foregoing claims 5-12, **characterised in that** the gimbal (16) accepts the measuring system (8).

14. Industrial robot with a support arm that can be moved in space, bearing a processing system (2) according to one of the foregoing claims.

## Revendications

1. Dispositif d'usinage pour l'usinage d'une pièce, sachant qu'un outil d'usinage (2a) monté rotatif est maintenu dans une unité d'usinage (2), et que l'axe de rotation (X) de l'outil d'usinage (2a) peut être positionné par rapport à la surface de la pièce à usiner de manière à coïncider avec la normale géométrique (N) au point d'usinage de la surface de la pièce, comprenant
- une plaque de pression (6) montée à déplacement libre sur le dispositif d'usinage au moyen d'un dispositif formant palier (4), sachant que tant le dispositif formant palier (4) que la plaque de pression (6) présentent chacun une ouverture de passage (4a ; 6a) pour l'outil d'usinage (2a), et
- un dispositif de mesure (8) pour détecter un écart entre l'axe de rotation (X) et la normale à la surface (N) au point d'usinage par positionnement de la plaque de pression (6) sur la surface de la pièce dans la région du point d'usinage, **caractérisé en ce que** le dispositif formant palier (4) comprend un corps de palier (40b) présentant au moins une région de surface sphérique, et un logement de palier (40a) enserrant le corps de palier (40b) en engagement positif au niveau des régions de surface sphériques.

2. Dispositif d'usinage selon la revendication 1, **caractérisé en ce que** l'unité d'usinage (2) est réalisée sous forme d'unité de perçage avec une broche de perçage destinée à recevoir un outil d'usinage (2a).

3. Dispositif d'usinage selon la revendication 1 ou 2, **caractérisé en ce que** l'unité d'usinage (2) présente un dispositif d'avancement (10) au moyen duquel elle peut être déplacée axialement le long de l'axe de rotation (X).

4. Dispositif d'usinage selon la revendication 3, **caractérisé en ce que**
- la plaque de pression (6) et le dispositif formant palier (4) sont conçus en tant qu'élément d'une unité de pression (12),
- et l'unité de pression (12) peut, au moyen d'un dispositif d'entraînement (14), être déplacée axialement par rapport à l'unité d'usinage (2) dans la direction de l'axe de rotation (X) et indépendamment de l'unité d'usinage (2).

5. Dispositif d'usinage selon la revendication 4, **caractérisé en ce que** l'unité de pression (12) présente un cadre porteur (16) qui reçoit le dispositif formant palier (4) et qui, au moyen du dispositif d'entraînement (14), peut être déplacé en direction axiale le long de l'axe de rotation (X) par rapport à une plaque de base (18) ainsi que par rapport à l'unité d'usinage (2),
sachant que le logement de palier (40a) présente des ouvertures de passage axialement opposées pour l'outil d'usinage (2a), et que le corps de palier (40b) présente, dans la direction de l'axe de rotation (X), un orifice de passage aligné avec les ouvertures de passage du logement de palier (40a) et porte, sur le côté de l'orifice de palier qui est éloigné de la plaque de base (18), la plaque de pression (6) avec une ouverture de plaque de pression (6a) disposée coaxialement à l'orifice de passage.

6. Dispositif d'usinage selon l'une des revendications précédentes 4 ou 5, **caractérisé en ce que** l'unité de pression (12) ou des parties de celle-ci peut être transférée d'une position de travail, dans laquelle elle enserre sensiblement coaxialement l'outil d'usinage (2), dans une position de changement d'outil dans laquelle l'outil d'usinage (2) est libéré.

7. Dispositif d'usinage selon la revendication 6, **caractérisé en ce que** le cadre porteur (16) est monté à translation transversalement à l'axe de rotation (X) de l'outil d'usinage (2) au moyen d'une glissière de guidage (20), ou est monté à pivotement transversalement à l'axe de rotation (X) de l'outil d'usinage (2) au moyen d'une liaison articulée.

8. Dispositif d'usinage selon l'une des revendications précédentes, **caractérisé en ce que** la plaque de pression (6) présente, sur son côté éloigné du dispositif formant palier (4), un élément presseur (22) dans la région de l'ouverture de passage (4a).

9. Dispositif d'usinage selon la revendication 8, **caractérisé en ce que** l'élément presseur (22) présente, sur son côté tourné vers une pièce à usiner, une surface structurée de telle sorte que l'élément presseur (22) n'entre en contact avec la pièce à usiner que dans la région de bossages prédéfinis.

10. Dispositif d'usinage selon l'une des revendications précédentes 8 et 9, **caractérisé en ce que** l'élément presseur (22) est constitué de parties segmentées individuelles.

11. Dispositif d'usinage selon l'une des revendications précédentes, **caractérisé en ce que** le dispositif de mesure (8) comprend une pluralité de capteurs de mesure de déplacement, qui détectent les mouvements de points individuels de la plaque de pression (6) qui résultent de la pression de la plaque de pression (6).

12. Dispositif d'usinage selon l'une des revendications précédentes, **caractérisé en ce que** le dispositif de mesure (8) est disposé entre le cadre porteur (16) et la plaque de pression (6).

13. Dispositif d'usinage selon l'une des revendications précédentes 5 à 12, **caractérisé en ce que** le cadre porteur (16) reçoit le dispositif de mesure (8).

14. Robot industriel avec un bras porteur qui peut être déplacé dans l'espace et qui porte un dispositif d'usinage (2) selon l'une des revendications précédentes.
